# EUROPEAN PATENT APPLICATION

(11) **EP 4 786 241 A1**
(43) Date of publication of application: **05.08.2026**
(21) Application number: 25155087.7
(22) Date of filing: 30.01.2025
(51) Int. Cl.: B60K 35/22, B60K 35/28, B60K 35/29, B60K 35/60, B60K 35/81, B60W 50/14, G07C 5/06

(54) **DISPLAY DEVICE FOR DISPLAYING A REPRESENTATION OF DRIVING TIMES AND BREAK TIMES FOR A DRIVER OF A MOTOR VEHICLE, MOTOR VEHICLE, AND METHOD**

(71) Applicant: VOLKSWAGEN AG, 38440 Wolfsburg (DE); Scania CV AB, 151 87 Södertälje (SE)
(72) Inventor: Mrusek, Falk, 38530 Didderse (DE); Heissner, Patrick, 38473 Tiddische (DE)
(74) Representative: Hofstetter, Schurack & Partner

(57) **Abstract**

The invention relates to a display device (2) for displaying a representation (16) of driving times (13) and break times (14) for a driver of a motor vehicle (1), with at least one display element (4) and an electronic computing unit (3). The electronic computing unit (3) enables determination of a first ratio between the current driving time (13) and a future required break time (14), or a second ratio between a current break time (14) and a potential future driving time (13). The respective current ratio (16) is displayable as a ratio display (16) on the display element (4). Furthermore, the invention relates to a motor vehicle (1) and a method.

## Description

The following invention relates to a display device for displaying a representation of driving times and break times for a driver of a motor vehicle, comprising at least one display element and an electronic computing unit according to the pending claim 1. Furthermore, the invention relates to a corresponding motor vehicle and a method for displaying a representation of driving times and break times.

The statutory regulations for driving and rest times of, for example, truck drivers are intended to ensure road safety by reducing driver fatigue. These regulations are, for example, laid down in the European Union by Regulation No. 561/2006 and implemented by the member states.

The most important provisions of the regulation stipulate that truck drivers may have a maximum daily driving time of nine hours, which can be extended to ten hours once per week. Every 24-hour period, the driver must take at least 11 consecutive hours of rest or two consecutive rest periods totaling 12 hours, with the second rest period being in a provided reclining space or sleeping cabin in the vehicle. In addition, truck drivers must take a weekly rest period of at least 45 hours, which can be taken either uninterruptedly or in two consecutive periods of 24 hours each and 15 hours. The daily and weekly rest periods may not be combined on the same day as the weekly rest period.

Compliance with these regulations is monitored by using a digital control device, which records and stores the driver's driving and resting times. These recordings must be available for at least 28 days and can be viewed by police or other competent authorities during checks.

These driving and resting times contribute to reducing driver fatigue in trucks and thus increasing road safety. Studies have shown that fatigue is a major factor in traffic accidents, particularly on long-haul journeys. Adhering to statutory regulations for driving and rest times can help reduce fatigue and thus lower the risk of serious accidents. Furthermore, these regulations also promote a healthy work-life balance for truck drivers and contribute to maintaining their physical and mental well-being. By adhering to the prescribed rest periods, drivers can sleep better, rest and gather new energy for the next leg of their journey, which in turn improves their performance and concentration.

From the state of the art, so-called tachographs and indicators are particularly known, which are primarily text messages on the truck cockpit display. There are also acoustic alerts when driving times are exceeded.

A drawback of the current state of the art is that, in particular, no visual display for the driver is known which would make it easier for the driver to reliably plan and view the corresponding driving and rest times. Furthermore, there is no permanent display of the temporal course and the planned future time corridors for driving, break and rest times. There is also no correlation between required stops due to driving times.

There is thus a need in the current state of the art to implement a corresponding display for driving and break times for the driver as comfortably as possible.

CN 206 856 646 U refers to an accelerator pedal with a function for reminding the driver of fatigue, which includes an OBD connector, DC power supply, LED driver, LED display lamp, element for capturing the vehicle start signal, inductor for ambient brightness, central processing unit and voice output. The utility model discloses an external, vehicle-mounted automatic diagnostic system of the OBD connector, it establishes a communication connection with the vehicle-mounted automatic diagnostic system, the DC power is supplied to the central processing unit or the LED driver, it can be controlled by the central processing unit that the LED display lamp on the accelerator pedal lights up and the voice control sends and reminds the driver to take a break.

GB 2372585 B describes a timer for drivers of commercial vehicles subject to driving time regulations, which offers an automatic procedure for measuring "driving time" according to the description of "driving time" stipulated in the regulation, i.e., the time spent at the controls for operating the vehicle, regardless of whether the vehicle is moving or not. The timer is able to distinguish between stops during normal driving, such as at traffic lights, which are still counted as driving time, and stops where the driver performs "other work," such as delivering a shipment, which is not counted as driving time. The timer also records break times and stores the recorded driving times for each day of a two-week period, as well as weekly and bi-weekly total driving times according to the requirements of the regulations.

CN 115 384 542 A pertains to the technical field of vehicle warning, specifically a vehicle warning procedure and system based on an onboard display and a readable storage medium. The invention discloses a vehicle warning procedure based on an onboard display. This procedure involves the following steps: Recording information about the driver's condition; assessing the driver's driving status based on the information about the driving status; and, if the driver's driving status indicates drowsiness at the wheel, controlling the vehicle to warn the driver via the onboard display. It can effectively warn and prompt the driver to take a break when they are drowsy.

One object of the invention is to create a display device, a corresponding motor vehicle, and a corresponding method for representing driving and break times for a driver, particularly a truck driver.

This object is solved by a display device, a corresponding motor vehicle, and a corresponding method according to the independent claims. Advantageous embodiments are presented in the dependent claims.

One aspect of the invention relates to a display device for displaying a representation of driving time, break time, and in particular rest time for a driver of a motor vehicle, with at least one display element and an electronic calculating unit.

It is envisaged that the electronic computing unit determines a first ratio between the current driving time and a future required break time or a second ratio between a current break time and a potential future driving time, and the respective current ratio is displayable as a ratio display on the display element.

The invention specifically utilizes a display element, for example, in the form of a communication light in the vehicle, for example, a truck, to communicate the regulation of driving/break times. This allows both the driver and external authorities to view the current driving times. The driver is reminded early on via a "running bar or similar" to look for a parking space for breaks or can estimate how long they can still drive.

Specifically, this differs from the prior art by providing a representation via the display element and not merely through a cockpit display. This allows for a complex representation of break/driving/rest times and corresponding warnings.

The driving time in a truck refers specifically to the duration during which a truck driver actively controls the vehicle. This time is legally regulated to minimize fatigue and associated safety risks. Truck break time includes both planned breaks and rest periods. A break is an interruption of driving time during which the driver rests and does not have to be at the wheel. The minimum duration of these breaks depends on local regulations, usually at least 45 minutes after 4.5 hours of uninterrupted driving time. Rest time is a longer break from driving time during which the driver not only pauses but can devote themselves to restful sleep or leisure activities. The minimum duration of rest time also varies depending on regional regulations, but in many countries it is between 10-12 hours per 24-hour period. In some cases, multiple shorter rest periods may be allowed instead of a single long rest period, provided certain conditions are met.

The driver has the possibility to plan the duration and time of the required stop better and thus align it with refueling or loading operations, for example. When the driver is not "behind the wheel," the duration of the break can be displayed corresponding to the legally prescribed break or rest time. The display occurs specifically permanently in the so-called field of vision of the driver, but can also be visible from outside to authorities. This means no additional operation by the driver or authorities is required to display the driving/break times.

Specifically, more complex information can be transmitted via the display element. The position of the display element can be chosen in such a way that it is visible both to the driver and to external authorities, thus allowing for monitoring of adherence to driving times. Essentially, no additional components or modification of existing parts are necessary, as the function can be integrated into the display element.

The information about current driving and break times can be read out, for example, from the tachograph or journey recorder already built into the vehicle. This means that no additional hardware is necessary to obtain the corresponding times.

It should be noted that driving time is not only about driving itself, but also includes operating the engine as driving time.

In particular, displaying driving and break times for truck drivers has the advantage of ensuring compliance with legally prescribed driving and rest times to ensure road safety. A display helps the driver keep track of these times and ensure they are driving according to regulations. Ignoring driving and rest times can result in high fines that can affect both the company and the driver. A display helps the driver stay aware of these times and avoid violations.

Better planning of driving and break times can increase productivity by reducing unnecessary waiting times and optimizing travel times. A display helps the driver use their time more efficiently and increase their workload. Adhering to driving and rest times improves road safety by reducing driver fatigue. A display helps the driver conserve energy and ensure they are sufficiently rested to drive safely.

Through better planning of deliveries and optimization of driving and break times, timely delivery of goods can be ensured, which in turn increases customer satisfaction. Furthermore, adhering to driving and rest times can create better working conditions for drivers by promoting health and safety and reducing fatigue. A display helps the driver use their time more effectively and maintain a healthier work-life balance.

According to a favorable embodiment, the display element is designed as a bar indicator. This allows driving and break times to be displayed in a simple manner. For example, the driving time can be displayed on the left side of the bar indicator and the break time on the right side. By shifting different colors, a simple representation of driving and break times for the driver can be achieved.

Another advantageous embodiment provides that the display element is designed as a circular segment indicator. This allows, for example, the display of driving and break times in a kind of loop around the circle. Thus, it is easily understandable for the driver to interpret the respective representation and thus carry out corresponding driving or break planning.

Furthermore, it has proven advantageous if the current operational status of the motor vehicle can be determined using the electronic computing unit and the first ratio or the second ratio is displayed depending on this. For example, if the vehicle is in an operating mode, specifically in a driving mode, i.e., the engine is at least running, then the current driving time can be displayed on the left side and the corresponding break time on the right side. If the vehicle is in a parking state, i.e., the driver is taking a break or performing a rest period, then the rest time can be displayed on the left side, for example, and the potentially usable driving time on the right side. Thus, depending on the state of the vehicle or the driver, the corresponding display can be carried out.

Furthermore, it has proven advantageous if a first color is assigned to the driving time and a second color different from the first color is assigned to the break time. For example, driving time can be displayed in yellow and break time in red. Thus, it is easily understandable for the driver how the current ratio is and when, for example, a break should be taken or how long it can still be driven before a break is necessary.

It is also advantageous if an optical separator element is displayed between the displayed driving time and the displayed break time. The optical separator element can be arranged, in particular, between the display of the break and the driving time, and move accordingly on the display. The optical separator element thus serves as a separator of the two displays. For example, the optical separator element can be differently colored from the two displays, for example, displayed as a white point or white recess. The optical separator element can be used in particular to make an improved "optical" difference between the individual times visible. Thus, it is intuitively recognizable for the driver when, for example, a break is necessary.

It is also advantageous if the display element is optically visible for a driver of the vehicle within the vehicle. Furthermore, the display element can also be arranged to be optically visible from outside. Thus, the driver can reliably see the display element during operation of the vehicle, whereby the driver is, for example, informed when a break time is necessary. Moreover, it can also be provided that the display element is visible from outside so that, for example, authorities can monitor driving and break times without having to explicitly query the driver.

In another advantageous embodiment, it is envisaged that the display element is arranged in an A-pillar of the vehicle and/or in a windshield root of the vehicle and/or in a roof panel of the vehicle. By "roof panel" is particularly meant the transition between the windscreen and the roof lining. By "windshield root" is particularly meant the transition between the windscreen and the dashboard. The windscreen refers primarily to the windscreen of the vehicle. Thus, different positions can be provided where the display element is arranged. This has the particular advantage that both for the driver during operation and, for example, from outside, the display element can be reliably seen.

Another aspect of the invention relates to a motor vehicle with at least one display device according to the previous aspect. The motor vehicle is particularly designed as a truck, particularly as a motor vehicle weighing at least 3.5 t.

A further aspect of the invention relates to a method for displaying a representation of driving times and break times for a driver of a vehicle using a display device according to the previous aspect. A current driving time and a future break time required are received, or a current break time and a potentially future driving time are received using the electronic computing unit. The first ratio or the second ratio is determined using the electronic computing unit. Then, the first ratio or the second ratio is displayed on the display element.

Advantageous embodiments of the display device are to be seen as advantageous embodiments of the motor vehicle and the method. The display device and the motor vehicle have specific features to carry out corresponding method steps.

For application cases or application situations that may arise in the method and which are not explicitly described here, it can be provided that a fault message and/or a request for user feedback is issued and/or a standard setting and/or a predetermined initial state is set according to the method.

In this disclosure, a computing unit/electronic computing unit can be understood as a data processing device with processing circuits. A computing unit can thus perform calculations to process data. The calculations can also include indexed accesses to a data structure, for example, a lookup table (LUT),

A computing unit can in particular comprise one or more computers, one or more microcontrollers and/or one or more integrated circuits, for example, one or more application-specific integrated circuits (ASICs), one or more field-programmable gate arrays (FPGAs) and/or one or more system-on-a-chip (SoCs). The computing unit can also include one or more processors, for example, one or more microprocessors, one or more central processing units (CPUs), one or more graphics processing units (GPUs) and/or one or more signal processors, in particular one or more digital signal processors (DSPs). The computing unit can also comprise a physical or virtual cluster of computers or other of the aforementioned units.

A computing unit can also include one or more hardware and/or software interfaces and/or one or more storage units. A storage unit can be implemented as volatile memory, for example, as dynamic random access memory (DRAM) or static random access memory (SRAM), or as non-volatile memory, for example, as read-only memory (ROM), programmable read-only memory (PROM), erasable programmable read-only memory (EPROM), electrically erasable programmable read-only memory (EEPROM), flash memory or flash-EEPROM, ferroelectric random access memory (FRAM), magnetoresistive random access memory (MRAM), or phase-change random access memory (PCRAM).

The invention also encompasses combinations of the features of the described embodiments. The following describes examples of embodiments of the invention.
Fig. 1 a schematic side view of an embodiment of a motor vehicle with an embodiment of a display device;
Fig. 2 a schematic view of an interior of a motor vehicle according to Fig. 1; and
Fig. 3 another schematic view of an interior of a motor vehicle according to Fig. 1.

The embodiments explained below are preferred embodiments of the invention. In the embodiments, the described components each represent individual, independently reviewable features of the invention, which individually further develop the invention and can therefore be viewed as part of the invention either individually or in a different combination than shown.

Furthermore, the described embodiments can also be supplemented by further of the already described features of the invention.

In the figures, functionally equivalent elements are each provided with the same reference signs.

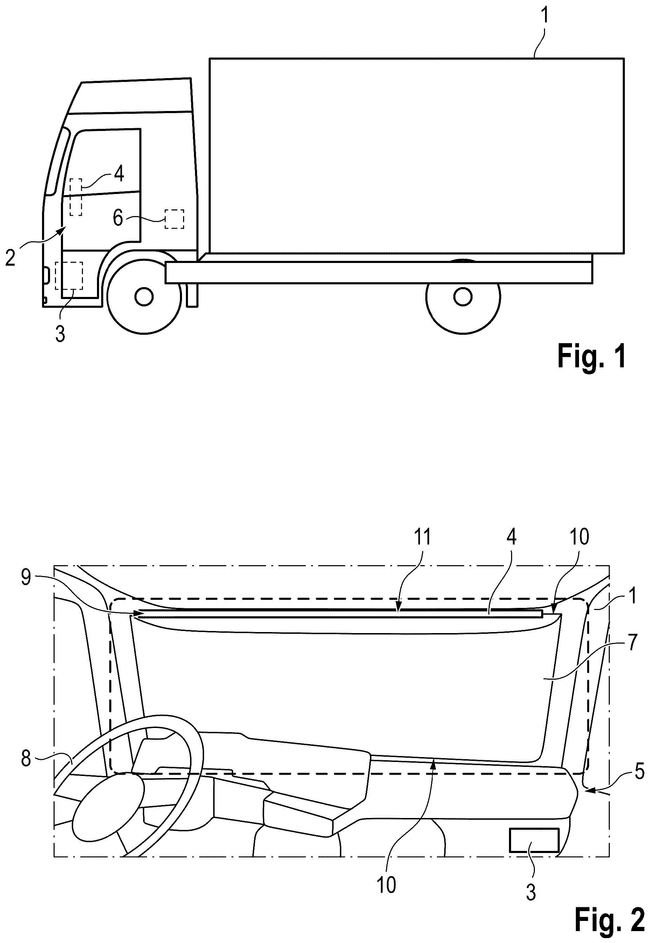

Fig. 1 shows a schematic side view of an embodiment of a motor vehicle 1. In this embodiment, the motor vehicle 1 is particularly designed as a truck. Especially for trucks or vehicles weighing more than 3.5 t, it is necessary that driving and break times are documented accordingly, for example, via a tachograph or a driver's log. The motor vehicle 1 according to Fig. 1 features an display device 2 in this embodiment. The display device 2 has at least an electronic computing unit 3 and a display element 4. The display element 4 is particularly designed in an interior 5 (Fig. 2) and is particularly visible both by the driver of the motor vehicle 1 and from outside.

Furthermore, the vehicle 1 features a tachograph 6. The electronic computing unit 3 can, for example, receive information from the tachograph 6, particularly information regarding current driving time and current break time, as well as future driving times and future break times.

The electronic computing unit 3 is particularly designed to perform the mathematical calculation of driving and break times into optically perceptible control signals for the display device 2 or the display element 4. This calculation can also be carried out country-specific and, for example, automatically adapted to the specific national regulations when crossing a border.

Fig. 2 shows a schematic view of the motor vehicle 1 from the interior 5, particularly on a windshield 7 of the motor vehicle 1. It particularly shows a steering wheel 8 behind which a corresponding driver of the motor vehicle 1 can sit. Furthermore, in Fig. 2, the display element 4 is essentially shown at a roof panel 9. Alternatively, for example, the display element 4 could be designed at a windshield root 10.

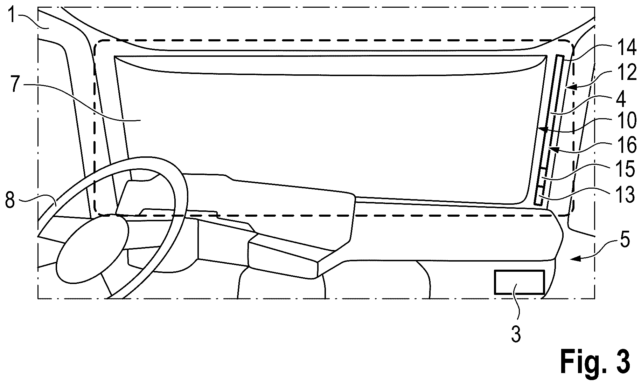

In particular, Fig. 2 or Fig. 3 show the display device 2 to display a representation 16 of driving times 13 and break times 14 for a driver of the vehicle 1. It is provided that, by means of the electronic computing unit 3, a first ratio between the current driving time 13 and a future required break time 14 or a second ratio between a current break time 14 and a potentially future driving time 13 can be determined and the respective current ratio displayed as a ratio display 11 on the display element 4.

Fig. 2 particularly shows that the display element 4 is designed as a bar graph. Alternatively, the display element 4 can also be designed as a pie chart.

Furthermore, it may be provided that a current operating status of the motor vehicle 1 is determined by means of the electronic computing unit 3 and, depending on this, either the first ratio or the second ratio is displayed.

Furthermore, it is particularly provided that a first color is assigned to the driving time 13 and a second color different from the first color is assigned to the break time 14. Additionally, it is particularly provided that the display element 4 is optically visible for a driver of the motor vehicle 1 within the motor vehicle 1.

Fig. 3 shows another schematic perspective view of the motor vehicle 1. In this particular embodiment, it is particularly shown that the display element 4 can be designed on an A-pillar 12 of the motor vehicle 1. Furthermore, it is shown that there is an optical separator 15 displayed between the displayed driving time 13 and the displayed break time 14. The optical separator 15 is particularly designed in the form of a moving point which indicates the status of the driving times. The optical separator 15 particularly indicates the current status.

The invention also relates to a method for displaying the representation 16 of driving times 13 and break times 14 for a driver of the motor vehicle 1 by means of the display device 2. A current driving time 13 and a future required break time 14 or a current break time 14 and a potentially future driving time 13 are received by means of the electronic computing unit 3. A first ratio or a second ratio is determined by means of the electronic computing unit 3 and the first ratio or the second ratio is displayed on the display element 4.

In particular, the invention therefore provides that the display element 4 is particularly used in the truck to communicate the regulation of driving and break times. Both the driver and authorities outside can see the current driving times. The driver is reminded early on by a running bar that he should soon look for a parking space for breaks or can estimate how long he can still drive.

Consequently, regardless of the tachograph 6, a representation of driving and break times 13, 14 is displayed via the display element 4, and particularly for the complex regulation of break, driving, and rest times.

The driver has the possibility to plan the duration and times for the required stops better and thus to carry out refueling or HV charging processes simultaneously. When the driver is not behind the wheel, the rest time of the legally prescribed break and rest times can be displayed. The display occurs permanently in the driver's field of vision, but can also be visible to authorities from outside. No additional operation by the driver or the authorities is required to display driving times or similar information.

For example, the display element 4 can be designed above the windscreen in the motor vehicle 1. The driving time can be represented as a yellow marked corridor and the break time 14 as a red marked corridor, which are always visible. The ratio of the yellow and red corridor divides itself depending on the driving/break time. The closer one gets to the end of the current phase (driving or breaking/resting), the larger the displayed corridor becomes.

The position of the visual representation can also be in the A-pillar 12 in a vertical execution or, as in Fig. 2, in the roof panel 11 or in the windshield root 10 in a horizontal execution. It is also possible to provide at least two simple, colorless or colored light sources which indicate whether the driver is allowed to drive or not. Furthermore, the ratio of the yellow and red corridor can shift, otherwise the corridors can remain the same, but a marking, particularly the separator element 15, can move along the display element 4. Projections onto surfaces in the cab can also be used. Contents can also be projected onto the road via matrix headlights. VR glasses are also possible.

### Reference Signs

- 1: vehicle
- 2: display device
- 3: electronic computing unit
- 4: display element
- 5: interior
- 6: tachograph
- 7: windscreen
- 8: steering wheel
- 9: roof panel
- 10: windshield root
- 11: ratio indicator
- 12: A-pillar
- 13: driving time
- 14: break time
- 15: separator element
- 16: representation

## Claims

1. A display device (2) for displaying a representation (16) of driving times (13) and break times (14) for a driver of a motor vehicle (1), with at least one display element (4) and an electronic computing unit (3), **characterized in that**, by means of the electronic computing unit (3), a first ratio between the current driving time (13) and a future required break time (14) or a second ratio between a current break time (14) and a potential future driving time (13) is determined, and the respective current ratio (16) is displayable as a ratio display (11) on the display element (4).

2. The display device (2) according to claim 1,
**characterized in that**
the display element (4) is designed as a bar chart.

3. The display device (2) according to claim 1,
**characterized in that**
the display element (4) is designed as a pie chart.

4. The display device (2) according to one of the preceding claims,
**characterized in that**
a current operating state of the vehicle (1) is determined by means of the electronic computing unit (3), and depending on this, either the first ratio or the second ratio is displayed.

5. The display device (2) according to one of the preceding claims,
**characterized in that**
a first color is assigned to the driving time (13) and a second color different from the first color is assigned to the break time (14).

6. The display device (2) according to one of the preceding claims,
**characterized in that**
an optical separating element (15) is displayed between the displayed driving time (13) and the displayed break time (14).

7. The display device (2) according to one of the preceding claims,
**characterized in that**
the display element (4) is optically visible for a driver of the vehicle (1) within the vehicle (1).

8. The display device (2) according to claim 7,
**characterized in that**
the display element (4) is arranged in an A-pillar (12) of the vehicle (1) and/or in a windshield root (10) of the motor vehicle (1) and/or in a roof panel (9) of the motor vehicle (1).

9. A motor vehicle (1) with at least one display device (2) according to any one of claims 1 to 8.

10. A method for displaying a representation (16) of driving times (13) and break times (14) for a driver of a motor vehicle (1), comprising:
- receiving, by means of an electronic computing unit (3), data on the current driving time (13) and the break time (14);
- determining, based on said data, a first ratio between the current driving time (13) and a future required break time (14) or a second ratio between a current break time (14) and a potential future driving time (13); and
- displaying said ratio on a display element (4), wherein the display element (4) is arranged in the motor vehicle (1).
